# EUROPEAN PATENT SPECIFICATION

(11) **EP 4 087 886 B1**
(45) Date of publication and mention of the grant of the patent: **11.11.2026**
(21) Application number: 21702121.1
(22) Date of filing: 04.01.2021
(51) Int. Cl.: C08G 18/18, C08G 18/24, C08G 18/30, C08G 18/40, C08G 18/48, C08G 18/63, C08G 18/76, C08K 5/54, C08L 25/08, C08L 75/08

(54) **MACROMER AND PROCESS FOR MAKING POLYMER POLYOLS**
MAKROMER UND VERFAHREN ZUR HERSTELLUNG VON POLYMERPOLYOLEN
MACROMÈRE ET PROCÉDÉ DE FABRICATION DE POLYOLS POLYMÈRES

(30) Priority: 06.01.2020 US 202062957348 P
(43) Date of publication of application: 16.11.2022
(73) Proprietor: Dow Global Technologies LLC, Midland, MI 48674 (US)
(72) Inventor: TÜRÜNÇ, Oguz, 4530 AA Terneuzen (NL); BABB, David A., Lake Jackson, Texas 77566 (US); PUSCHMANN, Florian, CH Zürich (CH); CLAESSENS, Sven, 4530 AA Terneuzen (NL); DE SMET, Antoon, 4530 AA Terneuzen (NL)
(74) Representative: Beck Greener LLP
(86) International application number: PCT/US2021/012032
(87) International publication number: WO 2021/141840

(56) References cited:
- CN-A- 109 836 538
- JP-A- H01 161 007
- US-A- 3 823 201

## Description

This invention relates to methods for making dispersions of polymer particles in a polyol.

"Polymer polyols" (sometimes known as "copolymer polyols") are widely used raw materials for manufacturing flexible polyurethane foam and other polyurethane products. They have a continuous phase made up of one or more compounds having multiple hydroxyl groups (*i.e*., a "polyol") into which another polymer is dispersed in the form of small particles. The dispersed polymer particles help to form open cells and to increase the load-bearing of polyurethane foam that is made with the polymer polyol.

Stability is an important characteristic of polymer polyols. If the dispersion is unstable, some or all of the dispersed polymer phase can settle out as the polymer polyol is stored, transported and used. This leads to fouling of transportation, storage and processing equipment, inconsistencies in the polymer polyol product and inconsistencies in polyurethanes made from the polymer polyol.

Stability is improved through the use of stabilizers. The stabilizer contains polyol-soluble groups, typically polyether chains which can have molecular weights up to several thousand. Some or all of the stabilizer resides at the surface of the dispersed polymer particles, where the polyol-soluble groups are believed to stabilize the particles through the interaction of these polyol-soluble groups with the continuous polyol phase.

One common type of stabilizer is a "macromer" compound, typically a polyether polyol in which one or more of the hydroxyl groups are capped with a group that contains polymerizable unsaturation. Those unsaturated stabilizers can copolymerize with the vinyl monomers used to make the dispersed polymer particles, thereby grafting the stabilizer directly to the particles. The capping group is almost always an ethylenically unsaturated polyisocyanate such as 3-isopropenyl-α,α-dimethylbenzylisocyanate (TMI) or isocyanatoethylmethacrylate (IEM). Other types of capping agents include halides such as vinyl benzyl chloride and ethylenically unsaturated siloxanes such as vinyltrimethoxylsilanes.

A shortcoming associated with the use of these isocyanate capping agents is they are very reactive with water, including atmospheric moisture, and tend to form amine and urea by-products during storage and handling. The amine and urea by-products are not useful stabilizer compounds and do not react with polyols to form stabilizer compounds. Stabilizers made from the isocyanate capping agents tend to be inconsistent in their composition and their performance. Polymer polyols made from these stabilizers are often less stable than is wanted. The presence of the amine and urea by-products also can interfere with the processing of the polymer polyols to produce polyurethane foam. It would be desirable to avoid these problems.

Epoxide compounds have been suggested for use in producing stabilizers for polymer polyols. *See, e.g.,* US 9,994,701, which mentions without further elaboration the possibility of using an unsaturated epoxide as a capping agent. US 5,059,641 describes epoxide-modified polyols as being useful stabilizers, but in this case neither the epoxide compound nor the stabilizer is unsaturated, and the stabilizer cannot copolymerize with the vinyl monomers during the manufacturing process.

JP H01161007 A, CN 109836538 A and US 3823201 A are dealing with preparation methods of polymer polyols which are further used for the preparation of polyurethane foams.

In one aspect, this invention is a process for making a polymer polyol, comprising polymerizing one or more low molecular weight ethylenically unsaturated monomers that have a molecular weight of no greater than 150 in a continuous liquid polyol phase and in the presence of 1.5 to 15% by weight, based on the weight of the low molecular weight ethylenically unsaturated monomers, of a stabilizer to form a dispersion of solid polymer particles in the continuous liquid polyol phase, wherein the stabilizer includes (i) a macromer produced in a reaction of a hydroxyl-containing polyether with an epoxide compound having a polymerizable carbon-carbon double bond; (ii) a pre-formed polymer formed by polymerizing a carbon-carbon double bond of such macromer, or (iii) a mixture of (i) and (ii) wherein the epoxide compound is one or more of isopropenyl benzyl glycidyl ether and vinyl benzyl glycidyl ether.

The applicant has found that many types of unsaturated epoxide compounds are unsuitable for use in making a macromer or stabilizer. Isopropenyl benzyl glycidyl ether and vinyl benzyl glycidyl ether which have two methylene groups bonded directly to the ether oxygen have been found to exhibit good reactivity with a hydroxyl-containing polyether while engaging in few if any unwanted side-reactions. The resulting macromer also polymerizes well during the formation of a pre-formed polymer and/or during the polymerization step that produces the polymer polyol.

In certain embodiments the stabilizer includes an unsaturated macromer. The macromer is a reaction product of a hydroxyl-containing polyether with an epoxide compound as described above. An alcohol group of the polyether reacts with the epoxide group of the epoxide compound in a ring-opening reaction to form an ether linkage. This introduces to the polyether a capping group that contains polymerizable carbon-carbon unsaturation. A hydroxyl group forms as a result of the opening of the epoxide ring.

The epoxide compound may have a molecular weight of, for example, up to 500, up to 300, up to 250 or up to 170.

Useful epoxide compounds are vinyl benzyl glycidyl ether (VBGE), and isopropenyl benzyl glycidyl (IBGE) ether, which have the following respective structures:

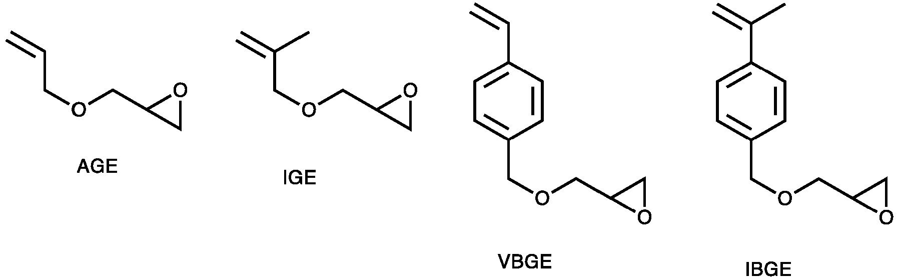

Allyl glycidyl ether (AGE) and isopropenyl glycidyl ether (IGE) are only reference examples. They do not represent the present invention. Of these, VBGE is more preferred. Many unsaturated epoxide compounds have been found to be unsuitable for forming a macromer, for various reasons. In some cases, the unsaturated epoxide compound reacts sluggishly with the polyether so little macromer is produced. Divinylbenzene monoxide is an example of such a poorly-reacting epoxide compound. Other compounds such as isopropenylphenyl glycidyl ether may engage in unwanted side reactions, in addition to being poorly reactive with the polyether. VBGE and IBGE have been found to have desirable reactivity and to engage in few unwanted side-reactions. These produce the wanted macromer in good yields. These epoxide compounds are very unreactive with atmospheric moisture. VBGE and AGE have the further advantages of being room temperature liquids.

The polyether may be, for example, a polymer of any one or more of ethylene oxide, propylene oxide, 1,2-butylene oxide, 1,3-butylene oxide, tetrahydrofuran, cyclohexane oxide, epichlorohydrin and styrene oxide. A preferred polyether is a homopolymer of propylene oxide or a random and/or block copolymer of propylene oxide and ethylene oxide. In a particular embodiment, the polyether is a random copolymer of 80 to 95% by weight propylene oxide and 5 to 20% ethylene oxide, especially a random copolymer of 84 to 90% by weight propylene oxide and 10 to 16% by weight ethylene oxide. For purposes of this invention, a copolymer of propylene oxide and ethylene oxide is considered to be "random" if the propylene oxide and ethylene oxide are provided to the polymerization in the aforementioned proportions and polymerized simultaneously.

The polyether before reaction with the epoxide compound may have one or more hydroxyl groups. It may have, for example, 2 to 16, 2 to 12, 2 to 8 or 4 to 8 hydroxyl groups.

The hydroxyl equivalent weight of the polyether before reaction with the epoxide compound may be, for example, at least 300, at least 500, at least 1000 or at least 1500, and may be, for example, up to 3000, up to 2500 or up to 2000. Equivalent weight is conveniently determined using titration methods per ASTM 4274-88 or equivalent, converting the measured hydroxyl number in mg KOH/g to equivalent weight using the relatsionship: Equivalent Weight = 56,100 ÷ hydroxyl number. The molecular weight of the polyether may be, for example, at least 300, at least 1000, at least 2500, at least 5000, at least 6000, at least 8000 or at least 11,000 g/mol and, for example, up to 25,000, up to 15,000 or up to 14,000 g/mol. Molecular weights as reported herein are number averages as determined using gel permeation chromatography methods, against a polystyrene standard.

The polyether prior to reaction with the epoxide compound preferably contains no more than 0.2 milliequivalents per gram of terminal unsaturation, as measured according to ASTM 4671-16.

The epoxide compound and polyether can be reacted at a ratio of, for example, up to 1 mole of epoxide compound per equivalent of hydroxyl groups provided by the polyether. A preferred ratio is up to 1.25 or up to 1 mole of epoxide compound per mole of polyether, to minimize the formation of macromer compounds that have two or more carbon-carbon double bonds. An especially preferred ratio is 0.2 to 0.8 or 0.25 to 0.6 moles of the epoxide compound per mole of the polyether.

The product of the reaction of epoxide compound and polyether is a macromer having a polyether portion and an average at least one terminal group having a polymerizable carbon-carbon double bond corresponding to that of the starting epoxide compound. By "polymerizable", it is meant that the double bond can polymerize with carbon-carbon double or triple bonds of other molecules (including other macromer molecules and the low molecular weight ethylenically unsaturated monomers described herein) to form a polymer. The macromer preferably has an average of 1 to 2, more preferably 1 to 1.5, polymerizable carbon-carbon double bonds per molecule.

Some portion of the starting polyether may remain unreacted, especially when less than one mole of epoxide compound is used per mole of epoxide compound. It is generally unnecessary to separate the macromer from unreacted polyether before using the macromer to manufacture a polymer polyol.

The macromer may contain one or more hydroxyl groups. In some embodiments, the macromer contains at least one, at least 2 or at least 3 hydroxyl groups per molecule. In particular embodiments the macromer contains 3 to 8, 4 to 7 hydroxyl or 4 to 6 hydroxyl groups per molecule.

The molecular weight of the macromer is generally equal to that of the polyether plus that of the group introduced in the capping reaction. The number average molecular weight of the macromer may be, for example, at least 500, at least 1250, at least 2750, at least 5250, at least 6250, at least 8250 or at least 11,250 g/mol and, for example, up to 26,000, up to 16,000 or up to 15,000 g/mol.

In specific embodiments, the polyether portion of the macromer is a random copolymer of a mixture of 84 to 90% by weight propylene oxide and 10 to 16% by weight ethylene oxide, having a molecular weight of 8,000 to 15,000 g/mol and more preferably 11,000 to 14,000 g/mol, and the macromer contains 3 to 7 hydroxyl groups per molecule and 1 to 1.5 polymerizable unsaturated groups per molecule. In other specific embodiments, the polyether portion of the macromer is a random copolymer of a mixture of 85 to 90% by weight propylene oxide and 10 to 15% by weight ethylene oxide, having a molecular weight from 10,000 to 15,000 g/mol, and the macromer contains 4 to 6 hydroxyl groups per molecule and 1 to 1.5 polymerizable unsaturated groups per molecule.

The epoxide compound and polyether are combined and subjected to conditions under which at least one hydroxyl group of the polyether reacts with an epoxide ring of a molecule of the epoxide compound, opening the epoxide ring and forming an ether bond to one of the ring carbon atoms. A hydroxyl group is produced in this reaction. Suitable reaction conditions include a temperature of 0 to 200°C and a pressure such that the starting materials do not boil. The reaction preferably is performed under an inert atmosphere such as nitrogen, helium or argon, and in the absence of free radicals or other conditions such as would induce polymerization of the carbon-carbon double bonds.

The reaction may be catalyzed. Examples of useful catalysts include alkali metal hydroxides, alkali metal alkoxides and Lewis acids. Alkali metal hydroxide and alkali metal alkoxide catalysts are of particular interest because the polyether may be prepared by polymerizing one or more alkylene oxides in the presence of an alkali metal hydroxide or alkali metal alkoxide. Typically the polyether is neutralized at the end of the polymerization step to convert terminal -O⁻M⁺ moieties (M representing the alkali metal) to hydroxyl groups. An advantage of catalyzing the reaction with an alkali metal hydroxide or alkoxide is that the reaction of the polyether and epoxide compound can be performed before the polyether has been neutralized. Instead, the polyether is produced in a polymerization using an alkali metal hydroxide or alkali metal alkoxide polymerization catalyst and, without neutralizing the resulting polyether, combining the polyether with an epoxide compound defined above, and reacting them to produce the macromer. The macromer then can be neutralized. This can be performed in the same vessel or equipment in which the polyether is polymerized

The time required for the reaction may be, for example, from 1 minute to 24 hours.

The stabilizer of the invention includes the macromer as just described, and/or a preformed polymer of such a macromer. Such a pre-formed polymer may be formed by homopolymerizing the macromer or by copolymerizing the macromer with one or more other ethylenically unsaturated monomers having a molecular weight of up to 150. The preformed polymer may have a number average molecular weight from 30,000 to 1,000,000 g/mol as measured by gel permeation chromatography against a polystyrene standard, and an average of 1 to 20 pendant polyether chains per molecule. It may be a block or random copolymer of the macromer and one or other ethylenically unsaturated monomers having a molecular weight of up to 150.

A useful comonomer for making the pre-formed polymer of the macromer is styrene, although other vinyl aromatic monomers and/or one or more acrylate esters, one or more methacrylate esters, acrylonitrile are suitable. The amount of low molecular weight monomer (when used to make the macromere) may range from, for example, 0.1 to 10 parts by weight per part by weight of macromer, and more preferably from 1 to 5 parts by weight per part by weight of macromer.

The polymerization or copolymerization of the macromer to form the pre-formed polymer may be performed in a free-radical polymerization, including in a "controlled radical polymerization", by which is meant a living free-radical polymerization process characterized in that a dynamic equilibrium between propagating radicals and dormant species is established, allowing radicals to become reversibly trapped. Various types of controlled radical polymerizations are known including, for example, cobalt-mediated radical polymerization (CMPR), stable free radical mediated polymerization (SFRMP) (including, for example, a nitroxide-mediated polymerization (NMP)), atom transfer radical polymerization (ATRP) and reversible addition fragmentation chain transfer (RAFT). Preferred processes are the RAFT and nitroxide-mediated polymerization processes.

The polymerization of the macromer to form the pre-formed polymer can be performed in bulk, but may instead be performed as a mixture or dispersion in a carrier. The carrier may constitute up to about 80%, preferably about 20 to 80% and more preferably about 50 to 80%, of the combined weight of the carrier, macromer and low molecular weight monomers (if any). The carrier material may include, for example, a polyether polyol such as, for example, an uncapped portion of the random copolymer used in preparing the macromer.

Alternatively or in addition, the carrier may include one or more low molecular weight compounds having a molecular weight of about 250 or less, which are not polyethers and are not copolymerizable with the macromer, and which are solvents for the low molecular weight monomer(s). Suitable carriers of this type include aromatic hydrocarbons such as toluene or xylene, aliphatic hydrocarbons such as hexane, monoalcohols such as ethanol and isopropanol, and ketones such as acetone. If such a low molecular weight compound is used as all or part of the carrier, it should be removed before, during or after the time that the pre-formed polymer is used to make the polymer polyol. Similarly, residual monomers and other volatile polymerization by-products can be removed from the pre-formed polymer before, during or after the time the polymer polyol is prepared. These materials can be removed by subjecting the pre-formed polymer or the polymer polyol to reduced pressures and/or elevated temperatures, or by various other stripping methods.

In the polymer polyol manufacturing process of this invention, one or more low molecular weight ethylenically unsaturated monomers that have a molecular weight of no greater than 150 are polymerized in a continuous liquid polyol phase and in the presence of a stabilizer as described herein, *i.e.,* a macromer as described above and/or a pre-formed polymer thereof. From 1.5 to 15% by weight of the stabilizer of the invention is present, based on the weight of the low molecular weight monomers. A preferred amount is from 2 to 10% by weight and a still more preferred amount is 2 to 8% by weight, based on the weight of the low molecular weight monomers.

Additional stabilizers can be present in addition to the macromer and/or pre-formed polymer of this invention. However, it is preferred that the macromer and/or pre-formed polymer thereof constitute at least 50%, preferably at least 75%, more preferably at least 90% of the total weight of all stabilizers. The macromer and/or pre-formed polymer may be the only stabilizer(s) present. An advantage of this invention is that very good results are achieved when the macromer is used as the stabilizer without prior polymerization. Therefore, in preferred embodiments, the macromer is not formed into a preformed polymer, and the macromer constitutes at least 50%, at least 75%, at least 95% of the weight of all the stabilizers. It may constitute up to 100% of the weight of all stabilizers.

Suitable methods of producing polymer polyols include those described, for example, in USP 4,513,124, USP 4,588,830, USP 4,640,935, USP 5,854,386, USP 4,745,153, USP 5,081,180, USP 6,613,827 and EP 1 675 885, modified by using the stabilizer of this invention. In general, these methods include dissolving the low molecular weight monomer(s) in a polyol and in the presence of the stabilizer, and subjecting the dissolved monomer to polymerization conditions until the polymer chains precipitate and are converted to solid polymer particles dispersed in a continuous polyol phase.

Examples of useful low molecular weight monomers include, for example, aliphatic conjugated dienes such as butadiene and isoprene; monovinylidene aromatic monomers such as styrene, α-methyl styrene, t-butyl styrene, chlorostyrene, cyanostyrene and bromostyrene; α,β-unsaturated carboxylic acids, and esters or anhydrides thereof such as acrylic acid, methacrylic acid, methyl methacrylate, ethyl acrylate, 2-hydroxyethyl acrylate, butyl acrylate, itaconic acid, maleic anhydride; α,β-unsaturated nitriles and amides such as acrylonitrile, methacrylonitrile, acrylamide, methacrylamide, N,N-dimethyl acrylamide, N-(dimethylaminomethyl) acrylamide; vinyl esters such as vinyl acetate, vinyl ethers, vinyl ketones, vinyl and vinylidene halides. Monovinylidene aromatic monomers such as styrene and ethylenically unsaturated nitriles such as acrylonitrile are preferred. Especially preferred are mixtures of styrene and acrylonitrile; such a mixture may contain, for example, 50 to 90% by weight styrene and 10 to 50% by weight acrylonitrile.

The polyol that forms the continuous phase in the polymer polyol product is an organic material or mixture of organic materials that is a liquid at room temperature (23°C) and which contains an average of at least 1.5 isocyanate-reactive groups per molecule. For purposes of this invention, the term "polyol" is used as a shorthand term for such materials, even though the actual isocyanate-reactive groups in a particular case may not necessarily be hydroxyl groups. Also for purposes of this invention, the macromer or preformed polymer of the macromer is not considered as part of the polyol. The liquid polyol preferably contains an average of 1.8 to 8 isocyanate-reactive groups/molecule, especially from 2 to 4 such groups. The isocyanate-reactive groups are preferably aliphatic hydroxyl, aromatic hydroxyl, primary amino and/or secondary amino groups. Hydroxyl groups are preferred. Hydroxyl groups are preferably primary or secondary hydroxyl groups.

The equivalent weight of the polyol per isocyanate-reactive groups will depend on the intended applications. Polyols having an equivalent weight of 400 or greater, such as from 400 to 3000, are preferred for forming elastomeric polyurethanes such as slabstock or molded polyurethane foams, microcellular polyurethane elastomers and non-cellular polyurethane elastomers. Lower equivalent weight polyols, such as those having an equivalent weight of 31 to 399, are preferred for making rigid polyurethane foams and structural polyurethanes.

Preferred types of liquid polyol(s) include polyether polyols, polyester polyols, and various types of polyols that are prepared from vegetable oils or animal fats.

Polyether polyols include, for example, polymers of propylene oxide, ethylene oxide, 1,2-butylene oxide, tetramethylene oxide, block and/or random copolymers thereof. Of particular interest are poly(propylene oxide) homopolymers; random copolymers of propylene oxide and ethylene oxide in which the poly(ethylene oxide) content is, for example, from about 1 to about 30% by weight; ethylene oxide-capped poly(propylene oxide) polymers; and ethylene oxide-capped random copolymers of propylene oxide and ethylene oxide. The polyether polyols may contain low levels of terminal unsaturation (for example, less than 0.02 meq/g or less than 0.01 meq/g). Examples of such low unsaturation polyether polyols include those made using so-called double metal cyanide (DMC) catalysts, as described for example in US Patent Nos. 3,278,457, 3,278,458, 3,278,459, 3,404,109, 3,427,256, 3,427,334, 3,427,335, 5,470,813 and 5,627,120. Polyester polyols typically contain about 2 hydroxyl groups per molecule and have an equivalent weight per hydroxyl group from about 400 to 1500. An uncapped polyether from the macromer-forming reaction may form all or part of the polyol.

Suitable polyesters include reaction products of polyols, preferably diols, with polycarboxylic acids or their anhydrides, preferably dicarboxylic acids or dicarboxylic acid anhydrides. Other suitable polyesters include polymers of cyclic lactones such as polycaprolactone.

Suitable polyols prepared from vegetable oils and animal fats include for example, hydroxymethyl group-containing polyols as described in WO 04/096882 and WO 04/096883; castor oil, so-called "blown" vegetable oils, and polyols prepared by reacting a vegetable oil with an alkanolamine (such as triethanolamine) to form a mixture of monoglycerides, diglycerides, and reaction products of the fatty acid amides, which are ethoxylated to increase reactivity and to provide a somewhat more hydrophilic character. Materials of the last type are described, for example in GB1248919.

Suitable low equivalent weight polyols include materials that are not copolymerizable with the stabilizer and which contain 2 to 8, especially 2 to 6 hydroxyl, primary amine or secondary amine groups per molecule and have a hydroxyl equivalent weight from 30 to about 200, especially from 50 to 125. Examples of such materials include diethanol amine, monoethanol amine, triethanol amine, mono- di- or tri(isopropanol) amine, glycerin, trimethylolpropane, trimethylolethane, pentaerythritol, sorbitol, ethylene glycol, diethylene glycol, 1,2-propylene glycol, dipropylene glycol, tripropylene glycol, ethylene diamine, phenylene diamine, bis(3-chloro-4-aminophenyl) methane and 2,4-diamino-3,5-diethyl toluene.

In the polymerization, the amount of low molecular weight monomers may range from 5 to 65%, preferably 15 to 55% and more preferably from 35 to 50%, by weight of all components of the reaction mixture. The "solids" of the product, *i.e*. the weight percentage of solid polymer particles in the product, is in general considered to be the same as the weight percentage of low molecular weight monomers present in the polymerization process, assuming essentially complete (95% or more) conversion of monomers to polymer, which is typical. The polyol(s) that form the continuous polyol phase may constitute 10 to 94%, preferably 30 to 70%, more preferably 40 to 60% by weight, based on the weight of the product.

Various other ingredients may be present during the polymer polyol production process, in addition to the polyol(s), low molecular weight monomer(s) and stabilizer(s). A polymerization catalyst preferably is present. The polymerization catalyst preferably is a free radical initiator that generates free radicals under the conditions of the polymerization process. Examples of suitable free-radical initiators include, for example, peroxy compounds such as peroxides, persulfates, perborates, percarbonates; azo compounds. Specific examples include hydrogen peroxide, di(decanoyl)peroxide, dilauroyl peroxide, t-butyl perneodecanoate, 1,1-dimethyl-3-hydroxybutyl peroxide-2-ethyl hexanoate, di(t-butyl)peroxide, t-butylperoxydiethyl acetate, t-butyl peroctoate, t-butyl peroxy isobutyrate, t-butyl peroxy-3,5,5-trimethyl hexanoate, t-butyl perbenzoate, t-butyl peroxy pivulate, t-amyl peroxy pivalate, t-butyl peroxy-2-ethyl hexanoate, lauroyl peroxide, cumene hydroperoxide, t-butyl hydroperoxide, azo bis(isobutyronitrile), 2,2'-azo bis(2-methylbutyronitrile). Two or more catalysts may be used. The amount of catalyst may range from 0.01 to 5%, preferably 0.0.1 to 3% by weight, based on the weight of the low molecular weight monomer(s).

A molecular weight regulator such as a chain transfer agent is another useful ingredient. Examples of these include low molecular weight aliphatic alcohols such as isopropanol, ethanol and t-butanol; toluene; ethylbenzene; certain tertiary amines such as triethylamine; mercaptans such as n-dodecylmercaptan and octadecylmercaptan; and chlorinated alkanes such as carbon tetrachloride, carbon tetrabromine, chloroform, methylene chloride. These materials are typically present (if used at all) in amounts ranging from 0.01 to 3%, preferably 0.25 to 2%, based on the weight of the low molecular weight monomers.

It is often beneficial to provide seed particles in the polymerization. The seed particles are solid particles of an organic polymer; the organic polymer most preferably is a polymer of one or more of the same low molecular weight monomers used in the polymerization. The seed particles may have any convenient particle size up to the target particle size for the polymerization. The seed particles are most conveniently provided in the form of a dispersion of the particles in a polyol phase. Such a dispersion can be specially made. However, a seed dispersion can be simply a portion of a previously-made polymer polyol, such as, for example, a portion of a previously made batch of the same polymer polyol product. In industrial batch or semi-batch processes, a reactor "heel", *i.e.,* a small portion of a previously made batch of copolymer polymer that remains in the reaction vessel after removal of the product, is a useful source of seed particles. The seed particles preferably constitute up to 5%, preferably up to 2% and more preferably up to 1%, of the weight of the product polymer polyol. If the seed particles are provided in the form of a seed dispersion, the seed dispersion may constitute up to 10%, preferably up to 5% and more preferably up to 3% of the total weight of the product polymer polyol.

The polymerization typically is performed at an elevated temperature, below the temperature at which any of the polyol(s) and/or low molecular weight monomers boils under the pressure conditions used, typically from 80 to 200°C, more typically 100 to 140°C, still more typically from 110 to 130°C. The free radical initiator may be selected in conjunction with the selection of polymerization temperature, so the free radical initiator decomposes to produce free radicals at the polymerization temperature.

The polymerization typically is performed under agitation to keep the low molecular weight monomers dispersed in the form of small droplets in the polyol phase until they have polymerized to form solid particles. The polymerization is continued until solid polymer particles are formed and preferably until at least 90%, more preferably at least 95% by weight of the low molecular weight monomers have become converted to polymer. During the polymerization, the macromer and/or pre-formed polymer thereof may in some cases copolymerize with the low molecular weight monomer(s) to graft the macromer or pre-formed polymer thereof to the dispersed polymer particles.

The polymerization can be performed continuously, or in various batch and semi-batch processes. A continuous process is characterized by the continuous introduction of polyol(s), stabilizer, and low molecular weight monomers into the polymerization, and continuous withdrawal of product. In a semi-batch process, at least a portion of the low molecular weight monomers is continuously or intermittently introduced into the polymerization, but product is not continuously withdrawn, preferably not being removed until the polymerization is completed. In the semi-batch process, some or all of the polyol(s) and/or stabilizer may be added continuously or intermittently during the process, but the entire amounts of those materials may instead be charged to the polymerization apparatus prior to the start of the polymerization. In a batch process, all polyol(s), stabilizer(s) and low molecular weight monomers are charged at the beginning of the polymerization, and product is not removed until the polymerization is completed.

After the polymerization is completed, the product may be subjected to operations such as the removal of volatiles (such as residual monomers and/or other low molecular weight materials). Volatiles can be removed, for example by heating and/or subjecting the product to subatmospheric pressures.

A polymer polyol of the invention may contain 5 to 65%, preferably 15 to 55% and more preferably 35 to 50%, by weight of dispersed polymer particles. In general, the amount of dispersed polymer particles in the product is taken to be the same as the amount of low molecular weight monomers used in the polymer polyol production process. The size of the dispersed thermoplastic polymer particles may be from about 100 nanometers to 100 microns in diameter, as measured by microscopy, with a preferred minimum particle size being at least 250 nanometers, a preferred maximum particle size being 20 microns, and a more preferred particle size being from 250 nanometers to 20 microns and an especially preferred particle size being from 500 nanometers to 3 microns. An advantage of this invention is that somewhat larger amounts of stabilizer can be used in this invention without leading to a large increase in viscosity when water is added to the product. Because larger amounts of stabilizer can be used, better stabilization of the monomer droplets is seen, which leads to smaller particle sizes. Smaller particle size may relate to improvements in reinforcing efficiency (as manifested by foam hardness normalized to density) that are often seen when the polymer polyol of the invention is used to manufacture flexible polyurethane foam.

The macromer and/or pre-formed polymer of the macromer (which may be grafted to the dispersed polymer particles) may constitute 0.25 to 10%, preferably from 0.5 to 8% and more preferably from 0.5 to 5% based on the weight of the product. The polyol(s) that form the continuous polyol phase may constitute 10 to 94%, preferably 30 to 70%, more preferably 40 to 60% by weight, based on the weight of the product.

The polymer polyol is useful to make a wide variety of polyurethane and/or polyurea products. The polyurethane and/or polyurea products will be in most instances elastomeric materials that may be non-cellular, microcellular or foamed. Polyurethanes are typically prepared by reacting the polymer polyol or dispersion with a polyisocyanate. The polymer polyol product may be blended with one or more additional polyols, including those types described above, to adjust the solids content to a desired level or provide particular characteristics to a polyurethane made from the polymer polyol. The reaction with the polyisocyanate is performed in the presence of a blowing agent or gas when a cellular product is desired. The reaction may be performed in a closed mold, but in some applications, such as slabstock foam, the reaction mixture is generally permitted to rise more or less freely to form a low density foam material. Generally, the polymer polyol of the invention can be used in the same manner as conventional polymer polyol materials, using the same general types of processes as are used with the conventional materials.

Suitable polyisocyanates include aromatic, cycloaliphatic and aliphatic isocyanate. Exemplary polyisocyanates include m-phenylene diisocyanate, toluene-2,4-diisocyanate, toluene-2,6-diisocyanate, hexamethylene-1,6-diisocyanate, tetramethylene-1,4-diisocyanate, cyclohexane-1,4-diisocyanate, hexahydrotoluene diisocyanate, naphthylene-1,5-diisocyanate, 1,3- and/or 1,4-bis(isocyanatomethyl)cyclohexane (including cis- and/or trans isomers) methoxyphenyl-2,4-diisocyanate, diphenylmethane-4,4'-diisocyanate, diphenylmethane-2,4'-diisocyanate, hydrogenated diphenylmethane-4,4'-diisocyanate, hydrogenated diphenylmethane-2,4'-diisocyanate, 4,4'-biphenylene diisocyanate, 3,3'-dimethoxy-4,4'-biphenyl diisocyanate, 3,3'-dimethyl-4-4'-biphenyl diisocyanate, 3,3'-dimethyldiphenyl methane-4,4'-diisocyanate, 4,4',4"-triphenyl methane triisocyanate, a polymethylene polyphenylisocyanate (PMDI), toluene-2,4,6-triisocyanate and 4,4'-dimethyldiphenylmethane-2,2',5,5'-tetraisocyanate. Preferably the polyisocyanate is diphenylmethane-4,4'-diisocyanate, diphenylmethane-2,4'-diisocyanate, PMDI, toluene-2,4-diisocyanate, toluene-2,6-diisocyanate or mixtures thereof. Diphenylmethane-4,4'-diisocyanate, diphenylmethane-2,4'-diisocyanate and mixtures thereof are generically referred to as MDI, and all can be used. Toluene-2,4-diisocyanate, toluene-2,6-diisocyanate and mixtures thereof are generically referred to as TDI, and all can be used.

The amount of polyisocyanate used in making a polyurethane is commonly expressed in terms of isocyanate index, *i.e.,* 100 times the ratio of NCO groups to isocyanate-reactive groups in the reaction mixture (including those provided by water if used as a blowing agent). In general, the isocyanate index may range as low as 60 and as high as 500 or more. However, for the production of conventional slabstock foam, the isocyanate index typically ranges from about 95 to 140, especially from about 105 to 115. In molded and high resiliency slabstock foam, the isocyanate index typically ranges from about 50 to about 150, especially from about 85 to about 110.

A catalyst is often used to promote the polyurethane-forming reaction. The selection of a particular catalyst package may vary somewhat with the particular application, the particular polymer polyol or dispersion that is used, and the other ingredients in the formulation. The catalyst may catalyze the "gelling" reaction between the polyol(s) and the polyisocyanate and/or, in many polyurethane foam formulation(s), the water/polyisocyanate ("blowing") reaction which generates urea linkages and free carbon dioxide to expand the foam. In making water-blown foams, it is typical to use a mixture of at least one catalyst that favors the blowing reaction and at least one other that favors the gelling reaction.

A wide variety of materials are known to catalyze polyurethane-forming reactions, including tertiary amines, tertiary phosphines, various metal chelates, acid metal salts, strong bases, various metal alcoholates and phenolates and metal salts of organic acids. Catalysts of most importance are tertiary amine catalysts and organotin catalysts. Examples of tertiary amine catalysts include: trimethylamine, triethylamine, N-methylmorpholine, N-ethylmorpholine, N,N-dimethylbenzylamine, N,N-dimethylethanolamine, N, N, N', N'-tetramethyl- 1, 4-butanediamine, N,N-dimethylpiperazine, 1,4-diazobicyclo-2,2,2-octane, bis(dimethylaminoethyl)ether, triethylenediamine and dimethylalkylamines where the alkyl group contains from 4 to 18 carbon atoms. Mixtures of these tertiary amine catalysts are often used.

Examples of organotin catalysts are stannic chloride, stannous chloride, stannous octoate, stannous oleate, dimethyltin dilaurate, dibutyltin dilaurate, other organotin compounds of the formula SnRₙ(OR)₄₋ₙ, wherein R is alkyl or aryl and n is 0-2. Commercially available organotin catalysts of interest include Dabco^{™} T-9 and T-12 catalysts (both stannous octoate compositions available from Evonik Corporation).

Catalysts are typically used in small amounts, for example, each catalyst being employed from about 0.0015 to about 5% by weight of the high equivalent weight polyol.

When forming a foam, the reaction of the polyisocyanate and the polyol component is conducted in the presence of a blowing agent. Suitable blowing agents include physical blowing agents such as various low-boiling chlorofluorocarbons, fluorocarbons, hydrocarbons. Fluorocarbons and hydrocarbons having low or zero global warming and ozone-depletion potentials are preferred among the physical blowing agents. Chemical blowing agents that decompose or react to produce a gas under the conditions of the polyurethane-forming reaction are also useful.

The blowing agent may be, for example, water or a mixture of water and a physical blowing agent such as a fluorocarbon, hydrofluorocarbon, hydrochlorocarbon or hydrocarbon blowing agent. Water reacts with isocyanate groups to liberate carbon dioxide and form urea linkages. Typically, about 1 to about 7, especially from about 2.5 to about 5, parts by weight water are typically used per 100 parts by weight of polyols in the foam formulation.

Alternatively or in addition, a gas such as carbon dioxide, air, nitrogen or argon may be used as the blowing agent to produce polyurethane foam in a frothing process. Carbon dioxide can also be used as a liquid or as a supercritical fluid.

A foam-stabilizing surfactant is also used when a polyurethane foam is prepared. A wide variety of silicone surfactants as are commonly used in making polyurethane foams can be used in making the foams with the polymer polyols or dispersions of this invention. Examples of such silicone surfactants are commercially available under the tradenames Tegostab ^{™} (Evonkic Corporation), Niax^{™} (Momentive Performance Materials) and Dabco^{™} (Evonik Corporation).

In addition to the foregoing components, the polyurethane formulation may contain various other optional ingredients such as cell openers; fillers such as calcium carbonate; pigments and/or colorants such as titanium dioxide, iron oxide, chromium oxide, azo/diazo dyes, phthalocyanines, dioxazines and carbon black; reinforcing agents such as fiber glass, carbon fibers, flaked glass, mica, talc; biocides; preservatives; antioxidants; flame retardants.

In general, a polyurethane foam is prepared by mixing the polyisocyanate and polymer polyol in the presence of the blowing agent, surfactant, catalyst(s) and other optional ingredients as desired, under conditions such that the polyisocyanate and polyol react to form a polyurethane and/or polyurea polymer while the blowing agent generates a gas that expands the reacting mixture. The foam may be formed by the so-called prepolymer method (as described in U.S. Pat. No. 4,390,645, for example), in which a stoichiometric excess of the polyisocyanate is first reacted with the high equivalent weight polyol(s) to form a prepolymer, which is in a second step reacted with a chain extender and/or water to form the desired foam. Frothing methods (as described in U.S. Pat. Nos. 3,755,212; 3,849,156 and 3,821,130, for example), are also suitable. So-called one-shot methods (such as described in U.S. Pat. No. 2,866,744) are preferred. In such one-shot methods, the polyisocyanate and all polyisocyanate-reactive components are simultaneously brought together and caused to react. Three widely used one-shot methods which are suitable for use in this invention include slabstock flexible foam processes, high resiliency flexible slabstock foam processes, and molded flexible foam methods.

The following examples are provided to illustrate the invention, but are not intended to limit the scope thereof. All parts and percentages are by weight unless otherwise indicated.

### Examples

Vinyl benzyl glycidyl ether (VBGE) is synthesized as follows: 4-vinylphenyl methanol (98.3 parts), epichlorohydrin (106.2 parts), triethyl amine (74.2 parts) and NaOH (29.3) parts are mixed in a flask in an ice bath and stirred overnight. The resulting product is filtered. The filtrate is stripped under vacuum to remove triethylamine and then at 80°C and 10 millibars pressure until no further vapors condense. The product vinyl benzyl glycidyl ether is confirmed by NMR and gas chromatography.

100 parts of a nominally hexafunctional, 1864 equivalent weight random copolymer of 88.5% propylene oxide and 11.5% ethylene oxide are combined with about 2000 ppm of potassium hydroxide. 0.7 parts of VBGE are added at room temperature and the resulting reaction mixture is held at that temperature under a nitrogen atmosphere for 24 hours. The product is filtered and t-butyl catechol is dissolved into it. These amounts of VBGE and copolymer correspond to a mole ratio of approximately 0.41 moles of VBGE per mole of copolymer. About 87% of the VBGE reacts under these conditions. The product is a mixture of macromer and unreacted copolymer, the macromer constituting approximately 36% of the total weight of product. The macromer molecules mostly have 6 hydroxyl groups and a single terminal carbon-carbon double bond.

When a similar capping reaction is performed substituting isopropenylphenyl glycidyl ether for the VBGE, only about 9% of the isopropenylphenyl glycidyl ethereacts to form macromer, and various unwanted side-products form. When divinylbenzene monoxide is substituted for the VBGE, only about 50% of the divinylbenzene monoxide reacts.

Polymer polyol Example 1 is prepared by charging a stirred reactor with a mixture of 58.1 parts of a base polyol (a 1000 hydroxyl equivalent weight, nominally trifunctional random copolymer of 88.5% propylene oxide and 11.5% ethylene oxide), 2.5 parts of a previous-formed polymer polyol (the heel of a previous polymerization reaction) and 5.0 parts of the mixture of macromer and unreacted copolymer from above (*i.e*., about 1.8 parts of the macromer). This mixture is purged with nitrogen and vacuum several times. The internal reactor pressure is brought to 10 kPa and the mixture is then heated to 125°C. Separately, 70 parts of styrene, 30 parts of acrylonitrile, 0.49 parts of n-dodecylmercaptan and 0.18 parts of a free radical initiator are homogenized in a small amount of the base polyol. This blend is added to the stirred reactor at a uniform rate over three hours. At the end of the monomer addition, a blend of a second free radical initiator in a small amount of base polyol is added. The reaction temperature is then increased by 5°C every 30 minutes until a temperature of 145°C is attained, after which the reactor contents are allowed to react for another 60 minutes. The reactor is then cooled to 40°C. The resulting product is stripped under vacuum. This product, a stable, uniform dispersion of polymer particles in the base polyol, is designated Example 1. It contains 34% by weight dispersed styrene-acrylonitrile particles. The product is stable against settling and otherwise is similar in properties to an otherwise like polymer polyol product made using a TMI-capped polyether as the macromer.

Comparative Polymer Polyol A is made in the same general manner, increasing the amounts of styrene and acrylonitrile to produce a 43% solids copolymer polyol product. The stabilizer in this case is made by capping 100 parts by weight of the 1864 equivalent weight copolymer with 0.9 parts of TMI (3-isopropenyl-α,α-dimethylbenzylisocyanate). This results in a mixture containing about 45% capped copolymer and 55% of the 1864 equivalent weight copolymer.

Comparative Polymer Polyol B is made using the same ingredients as Comparative Polymer Polyol A, except in a continuous process. The polymer polyol has made has 44% solids.

The particles of Polymer Polyol Example 1 are similarly sized to those of Comparative Samples A and B, with essentially all particles having a size of less than 10 µm as measured by laser diffraction methods.

Flexible polyurethane foams are made from each of Polymer Polyol Example 1 and Comparative Polymer Polyols A and B. The formulations are as set forth in Table 1. The various ingredients are separately weighed out into suitably sized vessels. Polyol A (a 3500 molecular weight, nominally trifunctional random copolymer of propylene oxide and ethylene oxide), the polymer polyol, silicone surfactant, water and amine catalysts are combined in a flask using a high speed mixer at 23±3°C. A greater amount of Polyol A is added in Comparative Samples F-A through F-D to dilute the formulations to equivalent levels of styrene-acrylonitrile particles. Stannous octoate is added after 30 seconds, followed 10 seconds later by the polyisocyanate. The reaction mixture is mixed for an additional 10 seconds and then poured into an open 8 liter box, where it rises. 320 seconds after the polyisocyanate (80/20 mixture of 2,4- and 2,6-toluene diisocyanate) is added, the foams are transferred to a 140°C oven for 5 minutes to complete the cure. The foams are then aged for 24 hours at 23±3°C for 24 hours before samples are taken for property testing.

The foams are evaluated for density (ISO 845), compression force deflection (CFD) (ISO 3386-1), tensile and elongation (ISO1798), tear strength (ISO 8067) resilience (ASTM D3574), airflow (ISO7231), compression set (ISO 1856) and wet compression set (ISO 13362). Results are as indicated in Table 2.

**Table 1**

| Ingredient | Parts by Weight | | | | | |
|---|---|---|---|---|---|---|
| | Ex. 1 | F-A* | F-B* | Ex. 2 | F-C* | F-D* |
| Polyol A | 70.4 | 76.7 | 77.3 | 70.4 | 76.7 | 77.3 |
| Polymer Polyol Ex. 1 | 29.6 | 0 | 0 | 29.6 | 0 | 0 |
| Polymer Polyol A | 0 | 23.3 | 0 | 0 | 23.3 | 0 |
| Polymer Polyol B | 0 | 0 | 22.7 | 0 | 0 | 22.7 |
| Amine Catalysts¹ | 0.16 | 0.16 | 0.16 | 0.10 | 0.10 | 0.10 |
| Silicone Surfactant² | 0.8 | 0.8 | 0.8 | 0.5 | 0.5 | 0.5 |
| Stannous Octoate | 0.18 | 0.18 | 0.18 | 0.15 | 0.15 | 0.15 |
| Water | 3.9 | 3.9 | 3.9 | 2.2 | 2.2. | 2.2 |
| TDI (index) | 110 | 110 | 110 | 110 | 110 | 110 |

| | | | | | | |
|---|---|---|---|---|---|---|
| ***Not an example of the invention.** ¹A mixture of bis(dimethylaminoethyl)ether and triethylendiamine. ²Niax L580, from Momentive Perfomance Materials. | | | | | | |

**Table 2**

| Property | Result | | | | | |
|---|---|---|---|---|---|---|
| | Ex. 1 | F-A* | F-B* | Ex. 2 | F-C* | F-D* |
| Density, kg/m³ | 27.5 | 27.25 | 26.9 | 41.7 | 41.6 | 41.5 |
| CFD (40%), kPa | 5.2 | 5.2 | 5.8 | 5.5 | 5.5 | 5.8 |
| CFD Sag factor | 2.6 | 2.5 | 2.5 | 2.5 | 2.5 | 2.5 |
| CFD Hysteresis, % | 57.8 | 56.8 | 56.7 | 73.7 | 73.8 | 73.5 |
| Tensile Str., kPa | 133 | 129 | 131 | 147 | 135 | 141 |
| Elongation, % | 147 | 148 | 130 | 151 | 147 | 136 |
| Tear Str., N/m | 385 | 425 | 357 | 371 | 378 | 486 |
| Resilience, % | 35.8 | 31.3 | 30.3 | 42.0 | 41.3 | 41.0 |
| 75% Compression Set, % | 12 | 19 | 11 | 5 | 6 | 5 |
| 90% Compression Set, % | 23 | 18 | 17 | 11 | 12 | 11 |
| Wet Compression Set, % | 14 | 16 | 10 | 4 | 4 | 4 |

| | | | | | | |
|---|---|---|---|---|---|---|
| ***Not an example of the invention.** | | | | | | |

As the foregoing data shows, the macromer made using VBGE produces a polyurethane foam having properties that are not meaningfully different from those produced using a TMI-capped macromer.

## Claims

1. A process for making a polymer polyol, comprising polymerizing one or more low molecular weight ethylenically unsaturated monomers that have a molecular weight of no greater than 150 in a continuous liquid polyol phase and in the presence of 1.5 to 15% by weight, based on the weight of the low molecular weight ethylenically unsaturated monomers, of a stabilizer to form a dispersion of solid polymer particles in the continuous liquid polyol phase, wherein the stabilizer includes (i) a macromer produced in a reaction of a hydroxyl-containing polyether with an epoxide compound having a polymerizable carbon-carbon double bond; (ii) a pre-formed polymer formed by polymerizing a carbon-carbon double bond of such macromer, or (iii) a mixture of (i) and (ii) wherein the epoxide compound is one or more of isopropenyl benzyl glycidyl ether and vinyl benzyl glycidyl ether.

2. The process of claim 1, wherein at least 75% by weight of the stabilizer is the macromer.

3. The process of claim 2, wherein at least 95% by weight of the stabilizer is the macromer.

4. The process of any of claims 1-3, wherein the hydroxyl-containing polyether is a random copolymer of a mixture of 84 to 90% propylene oxide and 10 to 16% ethylene oxide, based on the weight of the polyether.

5. The process of any of claims 1-4, wherein the macromer has a molecular weight from 8000 to 15,000.

6. The process of any preceding claim, wherein the macromer contains an average of 4 to 6 hydroxyl groups per molecule and 1 to 1.5 polymerizable carbon-carbon double bonds per molecule.

7. The process of any preceding claim, wherein the low molecular weight ethylenically unsaturated monomers include at least one of styrene and acrylonitrile.

8. The process of claim 7, wherein the low molecular weight ethylenically unsaturated monomers include styrene and acrylonitrile at a weight ratio of 85:15 to 50:50.

9. A polymer polyol made in accordance with any of claims 1-8.

10. A polyurethane foam which is produced by reacting a polymer polyol of claim 9 with an organic polyisocyanate in the presence of a blowing agent.

## Patentansprüche

1. Prozess zum Herstellen eines Polymerpolyols, umfassend ein Polymerisieren eines oder mehrerer ethylenisch ungesättigter Monomere mit niedrigem Molekulargewicht, die ein Molekulargewicht von nicht mehr als 150 aufweisen, in einer kontinuierlichen flüssigen Polyolphase und in der Gegenwart von 1,5 bis 15 Gew.-%, bezogen auf das Gewicht der ethylenisch ungesättigten Monomere mit niedrigem Molekulargewicht, eines Stabilisators, um eine Dispersion von festen Polymerpartikeln in der kontinuierlichen flüssigen Polyolphase auszubilden, wobei der Stabilisator einschließt (i) ein Makromer, das in einer Reaktion eines hydroxylhaltigen Polyethers mit einer Epoxidverbindung produziert wird, die eine polymerisierbare Kohlenstoff-Kohlenstoff-Doppelbindung aufweist; (ii) ein vorgeformtes Polymer, ausgebildet durch das Polymerisieren einer Kohlenstoff-Kohlenstoff-Doppelbindung eines solchen Makromers, oder (iii) eine Mischung aus (i) und (ii), wobei die Epoxidverbindung eines oder mehrere von Isopropenylbenzylglycidylether und Vinylbenzylglycidylether ist.

2. Prozess nach Anspruch 1, wobei mindestens 75 Gew.-% des Stabilisators das Makromer ist.

3. Prozess nach Anspruch 2, wobei mindestens 95 Gew.-% des Stabilisators das Makromer ist.

4. Prozess nach einem der Ansprüche 1 bis 3, wobei der hydroxylhaltige Polyether ein statistisches Copolymer einer Mischung aus 84 bis 90 % Propylenoxid und 10 bis 16 % Ethylenoxid, bezogen auf das Gewicht des Polyethers, ist.

5. Prozess nach einem der Ansprüche 1 bis 4, wobei das Makromer ein Molekulargewicht von 8000 bis 15.000 aufweist.

6. Prozess nach einem der vorstehenden Ansprüche, wobei das Makromer durchschnittlich 4 bis 6 Hydroxylgruppen pro Molekül und 1 bis 1,5 polymerisierbare Kohlenstoff-Kohlenstoff-Doppelbindungen pro Molekül enthält.

7. Prozess nach einem der vorstehenden Ansprüche, wobei die ethylenisch ungesättigten Monomere mit niedrigem Molekulargewicht mindestens eines von Styrol und Acrylnitril einschließen.

8. Prozess nach Anspruch 7, wobei die ethylenisch ungesättigten Monomere mit niedrigem Molekulargewicht Styrol und Acrylnitril in einem Gewichtsverhältnis von 85 : 15 bis 50 : 50 einschließen.

9. Polymerpolyol, das nach einem der Ansprüche 1 bis 8 hergestellt ist.

10. Polyurethanschaum, der durch ein Umsetzen eines Polymerpolyols nach Anspruch 9 mit einem organischen Polyisocyanat in der Gegenwart eines Treibmittels produziert wird.

## Revendications

1. Procédé de fabrication d'un polyol polymère, comprenant la polymérisation d'un ou plusieurs monomères à insaturation éthylénique de faible poids moléculaire qui ont un poids moléculaire ne dépassant pas 150 dans une phase polyol liquide continue et en présence de 1,5 à 15 % en poids, par rapport au poids des monomères à insaturation éthylénique de faible poids moléculaire, d'un stabilisant pour former une dispersion de particules de polymère solides dans la phase polyol liquide continue, dans lequel le stabilisant comprend (i) un macromère produit lors d'une réaction d'un polyéther contenant un hydroxyle avec un composé époxyde ayant une double liaison carbone-carbone polymérisable ; (ii) un polymère préformé formé par la polymérisation d'une double liaison carbone-carbone d'un tel macromère, ou (iii) un mélange de (i) et (ii) dans lequel le composé époxyde est un ou plusieurs composés parmi l'éther glycidylique d'isopropényl benzyle et l'éther glycidylique de vinyl benzyle.

2. Procédé selon la revendication 1, dans lequel au moins 75 % en poids du stabilisant est le macromère.

3. Procédé selon la revendication 2, dans lequel au moins 95 % en poids du stabilisant est le macromère.

4. Procédé selon l'une quelconque des revendications 1 à 3, dans lequel le polyéther contenant un hydroxyle est un copolymère statistique d'un mélange de 84 à 90 % d'oxyde de propylène et de 10 à 16 % d'oxyde d'éthylène, par rapport au poids du polyéther.

5. Procédé selon les revendications 1 à 4, dans lequel le macromère a une masse moléculaire allant de 8 000 à 15 000.

6. Procédé selon l'une quelconque revendication précédente, dans lequel le macromère contient en moyenne de 4 à 6 groupes hydroxyle par molécule et de 1 à 1,5 double liaison carbone-carbone polymérisable par molécule.

7. Procédé selon l'une quelconque revendication précédente, dans lequel les monomères à insaturation éthylénique de faible poids moléculaire comportent au moins l'un parmi le styrène et l'acrylonitrile.

8. Procédé selon la revendication 7, dans lequel les monomères à insaturation éthylénique de faible poids moléculaire comprennent du styrène et de l'acrylonitrile selon un rapport pondéral de 85:15 à 50:50.

9. Polyol polymère selon l'une quelconque des revendications 1 à 8.

10. Mousse de polyuréthane qui est produite en faisant réagir un polyol polymère selon la revendication 9 avec un polyisocyanate organique en présence d'un agent gonflant.
